# EUROPEAN PATENT SPECIFICATION

(11) **EP 4 048 912 B1**
(45) Date of publication and mention of the grant of the patent: **06.12.2023**
(21) Application number: 20800263.4
(22) Date of filing: 22.10.2020
(51) Int. Cl.: F16C 35/04, F16C 25/08, F04D 19/04, F04D 29/056, F04D 29/058, F04D 29/52, F04D 29/58, F16C 35/067, F16C 32/04

(54) **BEARING SUPPORT AND PUMP**
LAGERTRÄGER UND PUMPE
SUPPORT DE PALIER ET POMPE

(30) Priority: 24.10.2019 GB 201915397
(43) Date of publication of application: 31.08.2022
(73) Proprietor: Edwards Limited, Burgess Hill, Sussex RH15 9TW (GB)
(72) Inventor: LUCCHETTA, Emiliano, Burgess Hill Sussex RH15 9TW (GB); KHOR, Eng Keen, Burgess Hill Sussex RH15 9TW (GB)
(74) Representative: Totman, Clare Elizabeth
(86) International application number: PCT/GB2020/052669
(87) International publication number: WO 2021/079130

(56) References cited:
- WO-A1-2018/096357
- WO-A1-2018/109474
- DE-A1- 4 408 624
- GB-A- 2 570 006
- US-A- 5 028 152
- US-A1- 2017 310 188

## Description

### FIELD OF THE INVENTION

The field of the invention relates to a support for supporting a bearing configured to mount a rotatable shaft. Further, the present invention relates to a pump comprising such a support.

### BACKGROUND

Bearings are used in rotating machines to support a rotatable shaft. There are different requirements on bearings depending on their particular use, but in general they should provide a low friction mounting that is able to operate effectively at high speeds. This is particularly the case for pumps such as a vacuum pump or compressor.

When the rotating machine or pump is operational the shaft heats up during rotation and may expand. This can lead to an axial displacement of the portion of the bearing that contacts the shaft. The support element that supports the bearing does not heat up to the same degree as the shaft and this leads to the portion of the bearing that contacts the support not suffering the same axial displacement which in turn leads to the tension the bearing is under and the tension the shaft is mounted under changing. This may introduce additional friction and wear on the bearings.

For example, where one of the bearings supporting a shaft is a roller bearing then the shaft may be mounted, perhaps via an offset magnetic bearing, to provide a preset tension on the roller bearing to reduce wear on the roller bearing. Movement of the shaft due to expansion can change the preset tension and increase wear on the roller bearing.

GB2570006 discloses a rotor for a vacuum pump that is supported at one end by a roller bearing and at the other end by a magnetic bearing. The magnetic bearing is configured with a small offset to the neutral position and provides a preload to the roller bearing. During operation the temperature of the rotor may rise such that the rotor is elongated due to thermal expansion and the preload increases. The magnetic bearing is formed of magnetic materials whose magnetic properties vary with temperature. In particular the bearing is formed of different magnetic materials, one of which has a decreasing magnetic permeability with increasing temperature, such that the magnetic force that provided the original preloading decreases as temperature rises and the rotor expands. This mitigates the increase in the preloading force due to expansion of the rotor.

It would be desirable to provide a support for a bearing that is able to at least partially compensate for axial displacement of a portion of a bearing that arises due to an increased temperature of the rotating shaft during operation.

### SUMMARY

A first aspect provides a support element for mounting a bearing configured to support a rotatable shaft; said support element comprising a distortable portion and a bearing mounting portion, said distortable portion being linked to said bearing mounting portion and being formed of a plurality of materials, each of said plurality of materials having a different coefficient of thermal expansion such that a change in temperature of said distortable portion causes said distortable portion to distort due to differential expansion of said plurality of materials; said support element being configured such that distortion of said distortable portion displaces said bearing mounting portion in an axial direction relative to an axis of said rotatable shaft that said bearing is configured to support, an amount of axial displacement being dependent on said temperature change.

The inventor of the present invention recognised that rotating shafts that are mounted on bearings may heat up and expand during use more than the support element that supports them does. This can lead to differential expansion of the two elements and axial displacement of the shaft relative to the support element. Providing a support element with a distortable portion that is operable to distort in response to a change in temperature allows the bearing mounting portion to be displaced axially in response to changes in temperature, which with appropriate design enables any axial displacement of the shaft due to temperature increase during operation to be at least partially mirrored by the support element, such that relative axial displacement between the bearing mounting portion and the shaft is reduced. Thus, the axial displacement is at least partially compensated for in a passive way.

The axial direction is a direction substantially in the direction of the axis of the shaft that the support element is configured to support.

In some embodiments, said support element comprises: an outer hub for mounting to a housing, and an inner hub comprising said bearing mounting portion, said inner and outer hub being linked together by said distortable portion.

One convenient way of mounting the shaft may be to have an outer region that is configured to mate with the housing and an inner region for supporting the shaft. The two can be linked by a distortable portion, such that distortion of said distortable portion causes said inner hub and outer hub to move axially with respect to each other.

In some embodiments, said outer hub is linked to said inner hub by a plurality of arms, at least some of said plurality of arms comprising said distortable portion.

Although the inner and outer hub may be linked together in different ways, in some cases via a distortable disk for example, one convenient way of mounting a shaft particularly in a pump where there may be a requirement for gas flow, is to mount one end of the shaft to the housing or stator using an outer hub and to support the shaft on an inner hub the two being connected by arms which allow gas flow between the two hubs. The hubs may be configured as hollow cylinders or rings. Providing the distortable portion on the arms, allows the inner hub to move relative to the outer hub, a substantial part of that movement being in the axial direction.

Although the distortable portion may be formed in a number of ways, in some embodiments, said distortable portion comprises a plurality of bimetallic strip. Where the distortable portion is formed as a plurality of arms, said plurality of arms each comprise one of said plurality of bimetallic strips, said bimetallic strips being configured to bend in response to said temperature change.

The distortable portion may be formed as a bimetallic strip, which strip conducts heat well and thus, adapts quickly to changes in temperature and whose coefficients of expansion differ. Where the bimetallic strip is mounted on the arms, the arms will bend in response to such changes in temperature. Although in many cases all of the arms may have the distortable portions, in some embodiments only a subset will, with the other arms being formed of more flexible material such that they bend in response to the bending of the bimetallic arms.

In some embodiments, said support element comprises a heater mounted in thermal communication with said distortable portion.

Although the distortion of the support element may be a passive reaction to changes in temperature in some embodiments, a heater may be provided to amplify the change in temperature and to increase any distortion. The heater may be switched on in response to a particular phase of operation of the rotating machine, or in response to detected axial displacement of the shaft.

A second aspect provides a pump comprising: a rotor and a stator; said rotor comprising a shaft rotatably mounted within said stator, said shaft being supported by at least two bearings, one of said bearings being mounted on a bearing mounting portion of a support element according to a first aspect.

Although the support element of the first aspect can be used to support shafts for many types of rotatable machine they are particularly suitable for supporting the shaft of a pump. Pumps rotate at high speeds and the rotor may heat up relative to the stator. The bearings supporting the shaft need to provide a low friction mounting at these high speeds.

In some of said embodiments, said one of said bearings mounted on said bearing mounting portion of said support element comprises a magnetic bearing.

In some embodiments, said magnetic bearing comprising a first magnetic element and a second magnetic element arranged in mutual repulsion to each other to provide a contact-less bearing.

Magnetic bearings provide low friction bearings, which do not require lubricants and thus, are particularly effective for pumps, particularly vacuum pumps.

The magnetic bearing comprises a first non-rotating magnetic element which is connected to the support element, and a second rotating magnetic element which is connected to the shaft of the rotor. First magnetic element and second magnetic element are arranged in close proximity and in mutual repulsion to each other to maintain a contactless bearing. This provides the advantage that no oil or grease is necessary which could contaminate the vacuum by outgassing. For cost reasons, usually only the bearing at the high vacuum end towards the inlet of the vacuum pump is built as a magnetic bearing. The second bearing at the high pressure side towards the outlet of the vacuum pump may be built as a roller bearing, since contamination of the vacuum by grease or oil in this area is negligible.

Upon operation of the vacuum pump, the temperature of the rotor may increase which may cause axial displacement of the two magnetic elements relative to each other. Providing a support element with a distortable portion helps to mitigate such an effect.

In some embodiments, said first and said second magnetic elements are mounted such that they are axially offset with respect to each other such that said magnetic bearing provides an axial pre-load to said shaft supported by said magnetic bearing.

In some embodiments, a further of said at least two bearings comprises a roller bearing.

It may be advantageous to mount the shaft with a preload, this is particularly the case where there is a roller bearing supporting the other end of the shaft, as this can improve the performance of the roller bearing. This preload can be provided by a small offset of the magnetic bearing from the neutral position, such that an axial force is employed towards the roller bearing in order to maintain radial stiffness of the rotor and to provide efficient operation of the roller bearing. However, during operation the temperature of the rotor rises such that the rotor is elongated due to thermal expansion. Thereby the preload to the roller bearing is increased which results in a fast wearout of the roller bearing. Thus, the lifetime of the roller bearing is reduced. Providing a support element that is configured to provide axial displacement of the bearing support portion in response to changes in temperatures allows the portion of the bearing supported by the support element to be axially displaced in a similar way and in the same direction as the portion of the bearing supporting the shaft. This in turn leads to the effects due to shaft expansion and the resulting changes in alignment of the magnetic bearing being mitigated.

In summary, the preload on the ball bearing is provided by the axial negative stiffness of the magnetic bearing, in some embodiments a passive magnetic bearing (PMB). During operation when the shaft temperature is higher than the stator temperature and the shaft expands in the axial direction more than the stator, the rotor part of the PMB moves further than the stator or support element part of the PMB increasing the axial preload on the ball bearing and thus the contact stress on the ball bearing raceways.

In some embodiments, said support element is configured such that an axial displacement of said rotor due to a rise in temperature during operation of said pump is at least partially offset by said axial displacement of said support element.

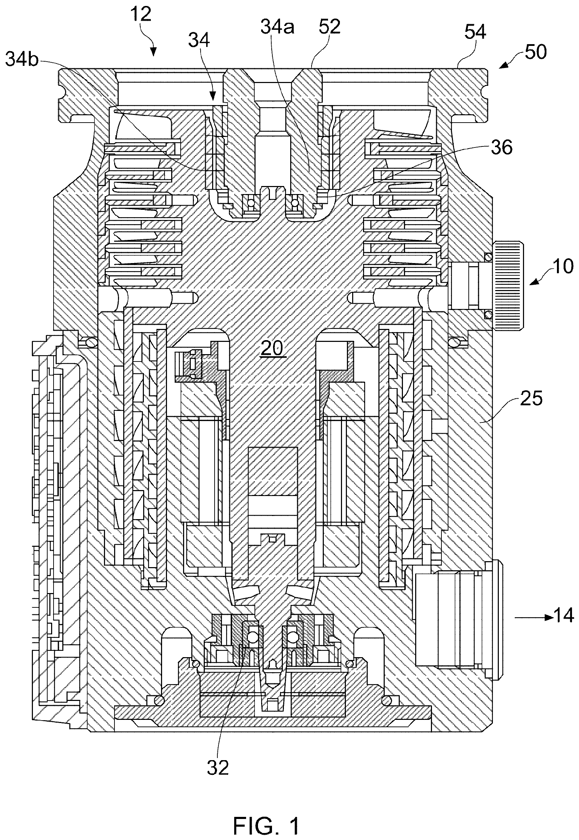

Some embodiments provide a simple mechanical method to move the PMB stator side support when the pump temperature increases during operation, in some embodiments using the bimetallic strip principle. Embodiments move the PMB support element or stator magnets in the same direction as the PMB rotor or shaft magnets (i.e. upwards referring to Figure 1) when the pump is operating at higher temperatures thereby decreasing the axial preload force on the ball bearing.

In some embodiments, said pump comprises a vacuum pump.

Vacuum pumps require rotors that rotate at high speed. Furthermore, their operation environment provides a vacuum which is a thermal insulating environment, between the stator or pump housing and the rotor. Thus, they are particularly prone to temperature differences between the shaft or rotor and the outer components of the pump during operation. Thus, embodiments are particularly effective for use in a vacuum pump.

In some embodiments, said pump comprises a turbomolecular pump.

In some embodiments, said support element is attached to said stator.

The support element for supporting the bearings may be integral with the stator or attached to the stator.

In some embodiments, said support element comprises a support element comprising a heater, and said pump further comprises: control circuitry configured to control said heater to heat said distortable portion during operation of said pump.

In some embodiments, the control of the distortion of the distortable portion may be active in addition to passively reacting to temperature changes. In such a case a heater may be used to increase the temperature of the distortable member. The heater may be controlled by control circuitry, which may be integral with the control circuitry of the pump and may respond to a particular stage in the operation of the pump to activate the heater. Alternatively and/or additionally the control circuitry may receive signals from sensors associated with the pump, these may be temperature sensors and/or displacement sensors operable to detect temperature changes or axial displacement of the shaft.

In some embodiments, the two bearings supporting the shaft are a passive magnetic bearing and a roller bearing, in some embodiments the roller bearing comprises a deep groove bearing configured to provide both axial and radial support. In other embodiments there may be two radial roller bearings, one of the rollers being bearing supported by the distortable support element and comprising a preload spring for providing a preload tension to the bearings. In other embodiments there may be an axial bearing and two radial bearings. In some embodiments there may be an axial bearing, a passive magnetic radial bearing and a radial roller bearing.

Where there are two bearings supporting the shaft one may be located close to the free end of the shaft, and one close to the fixed end. In some embodiments the support element supports the bearing close to the free end, this being the end where axial displacement due to expansion is felt the most. Where the bearing close to the free end is a PMB and the bearing close to the fixed end is a roller bearing under preload tension, then in some embodiments the support element may be configured to support the roller bearing that is located close to the fixed end, the support element supporting the stator side of the roller bearing and being configured to axially displace the stator side of the roller bearing to mitigate any increase in preload tension felt by the bearing due to expansion of the free end and displacement of the rotor element of the PMB at that end.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a vacuum pump according to an embodiment;
Figure 2 shows a support element according to an embodiment;
Figure 3 shows a section through a support element according to an embodiment;
Figure 4 shows the flexion of the support element of Figure 3; and
Figure 5 shows a support element, heater and control element according to an embodiment.

### DESCRIPTION OF THE EMBODIMENTS

Before discussing the embodiments in any more detail, first an overview will be provided.

Embodiments provide a mechanism configured to increase the thermal expansion or displacement in the axial direction of a support element for a shaft, which support element may in some embodiments be part of the stator of a vacuum pump, in particular a turbomolecular pump. The increase in thermal expansion is provided in order to at least partially offset the expansion of the shaft that occurs when the shaft heats up during operation.

Some embodiments use the principle of a bimetallic strip to provide this axial displacement, whereby two materials with very different coefficients of material expansion are joined to create a composite beam which, when heated bends at the unconstrained end. The mechanism can be implemented on the bearing support to move the bearing in the desired direction and where the shaft is mounted with a preload to relieve any preload increase that is otherwise created by rotor to stator differential thermal expansion in the direction of the rotor axis.

Figure 1 shows a pump 10 according to an embodiment. The pump is a turnbomolecular pump, with an inlet 12 and outlet 14. Rotor 20 is mounted in the embodiment on a radial roller bearing 32 and a passive radial magnetic bearing 34. The radial bearing 32 in this embodiment is a deep groove ball bearing with control of the tilt angle, and which thereby provides axial location as well as radial location. In other embodiments, there may additionally be an axial magnetic bearing. Passive radial magnetic bearing 34 has outer stator magnetic elements 34a that are attached to a support element 50, and inner shaft or rotor magnets 34b which support the shaft of rotor 20. The support element 50 has an inner hub 52 which forms the magnetic bearing support portion and an outer hub 54 which is attached to the stator 25 or housing of the pump.

In this embodiment the passive magnetic bearing (PMB) stator element 34a is offset in the axial direction relative to the PMB rotor element 34b once the pump has been assembled using an adjustment thread located on the support element 50. The adjustment thread is configured such that it pushes the PMB stator magnets 34a against a compliant spring 36. The actual preload is measured by placing weights on the rotor or using a force gauge until the PMB is unable to support the rotor 20. In other embodiments which have a belled rotor design, adjusting the preload after assembly is more challenging and the offset / preload is adjusted by shimming the bearing assembling, measuring the preload and repeating the process as required.

During operation the rotor 20 becomes significantly hotter than stator 25 and the rotor expands and the rotor PMB 34b is pushed upwards. The support element 50 is configured with distortable arms (not shown) between the inner and outer hubs of the support element 50. These arms distort with changes in temperature and act to push the inner hub 52 upwards such that the stator PMB 34a moves in the same axial direction as the rotor PMB 34b in response to these temperature changes, thereby at least reducing the changes in the preset tension due to axial movement of the rotor PMB 34b.

Although in this embodiment the distortable portion comprises the radial arms, in other embodiments, the distortable portion may be formed in a different way. For example, where the inlet to the pump is not between the inner and outer hub, the distortable portion may be a disc linking the two hubs.

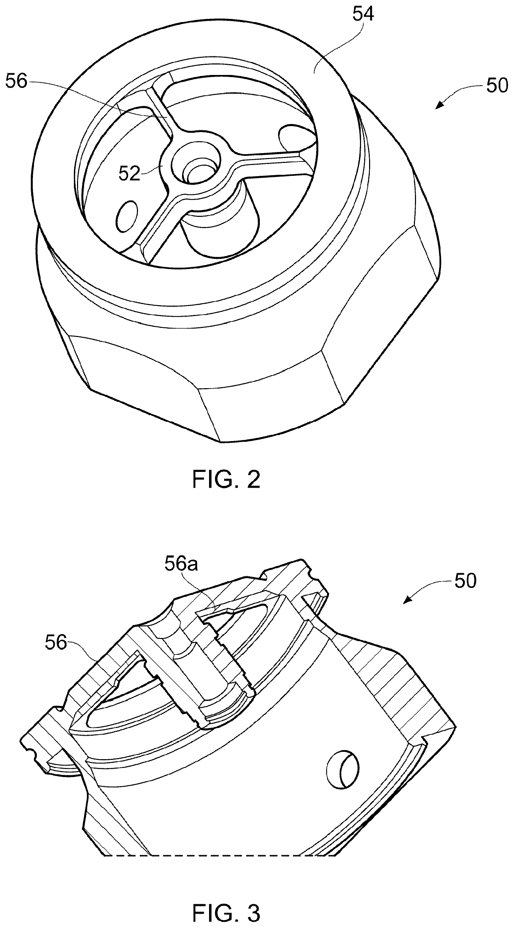

Figure 2 shows the support element 50. The support element 50 comprises an inner hub 52 which is the bearing mounting portion and an outer hub 54. The two hubs are cylindrical elements and are connected together by radial arms 56. The radial arms allow gas to flow into inlet 12 (see figure 1) of the pump.

In this embodiment there are three arms 56 that hold the cylindrical inner hub in the centre where the PMB stator magnets are attached. The arms comprise a separate beam in a material having a very different coefficient of thermal expansion which acts to shift the PMB stator magnets away from the rotor when the stator temperature increases.

Figure 2 shows the support element 50 from below and the beams 56a of the different material can be seen. In one embodiment the main portion of the arms 50 are made in Aluminium, which has a high coefficient of thermal expansion (~ 24 × 10⁻⁶ °C⁻¹), and each of the arms has been modified by machining away part of bottom surface of the arms and replacing it with a beam of a material with a lower coefficient of thermal expansion such as low carbon steel (~ 11 × 10⁻⁶ °C⁻¹) or Silicon Nitride (~ 3 × 10⁻⁶ °C⁻¹) - see Figure 3. The elastic forces arising when the pump temperature increases, bends the arms away from the rotor displacing the PMB stator and decreasing the preload. This at least partially relieves the increase caused by the rotor to stator differential expansion reducing the raceway stress on the bearings. In other embodiments other ceramic materials or a composite material with a low coefficient of thermal expansion such as a carbon fibre composite may be used to provide an increased relief of the preload increase.

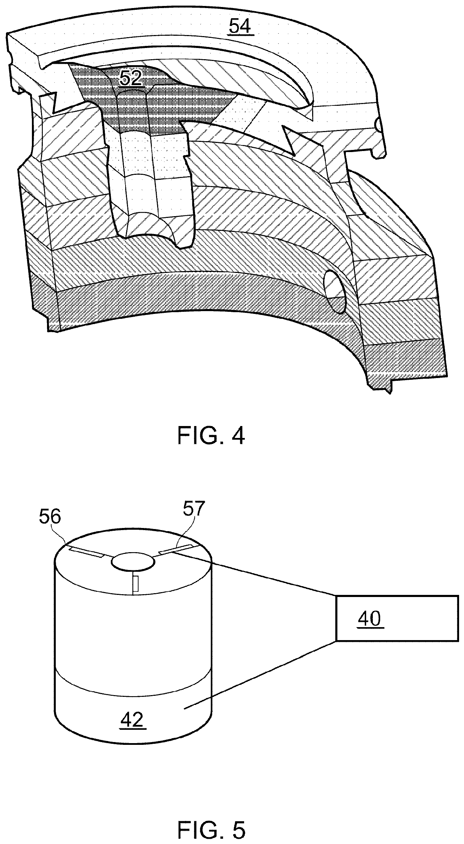

Figure 4 schematically shows how the arms 56 bend upwards when the upper portion expands more than the lower portion. This in turn moves the central hub 52 upwards away from the rotor mirroring the movement of the top end of the rotor shaft.

Figure 5 schematically shows a pump comprising arms 56 connecting the inner and outer hubs of the support element, each arm 56 comprising a heater 57 which is controlled by control circuitry 40. Control circuitry 40 also controls the operation of the pump controlling the motor 42 driving the rotor of the pump. In some embodiments control circuitry 40 will activate heaters 57 in synchronisation with the operation of the motor, so that the arms heat up as the rotor heats up. In other embodiments, control circuitry 40 may receive signals from sensors measuring either the temperature of an element of the pump, or axial displacement of the rotor and may activate the heaters 57 in response to these signals.

### REFERENCE SIGNS

- 10: pump
- 12: inlet
- 14: outlet
- 20: rotor
- 25: stator
- 32: roller bearing
- 34: magnetic bearing
- 34a: rotor passive magnetic bearing element
- 34b: stator passive magnetic bearing element
- 40: control circuitry
- 42: motor
- 50: support element
- 52: inner hub
- 54: outer hub
- 56: arms
- 57: heater

## Claims

1. A support element (50) for mounting a bearing (34) configured to support a rotatable shaft (20);
said support element (50) comprising a distortable portion (56) and a bearing mounting portion (52), said distortable portion (56) being linked to said bearing mounting portion (52) and being formed of a plurality of materials, each of said plurality of materials having a different coefficient of thermal expansion such that a change in temperature of said distortable portion causes said distortable portion to distort due to differential expansion of said plurality of materials;
said support element being configured such that distortion of said distortable portion displaces said bearing mounting portion (50) in an axial direction relative to an axis of said rotatable shaft (20) that said bearing is configured to support, an amount of axial displacement being dependent on said temperature change.

2. A support element according to claim 1, said support element comprising:
an outer hub (54) for mounting to a housing, and an inner hub (52), said inner hub comprising said bearing mounting portion, said inner and outer hub being linked together by said distortable portion (56).

3. A support element according to claim 2, said outer hub (54) being linked to said inner hub (52) by a plurality of arms (56), at least some of said plurality of arms comprising said distortable portion.

4. A support element according to claim 3, wherein said distortable portion comprises a plurality of bimetallic strips at least some of said plurality of arms comprising one of said plurality of bimetallic strips, said bimetallic strips being configured to bend in response to said temperature change.

5. A support element according to any preceding claim, said support element comprising a heater (57) mounted in thermal communication with said distortable portion.

6. A pump (10) comprising:
a rotor (20) and a stator (25);
said rotor (20) comprising a shaft rotatably mounted within said stator, said shaft being supported by at least two bearings (32, 34), one of said bearings (34) being mounted on a bearing mounting portion (52) of a support element according to any preceding claim.

7. A pump according to claim 6, wherein said one of said bearings mounted on said bearing mounting portion of said support element comprises a magnetic bearing (34).

8. A pump according to claim 7, said magnetic bearing comprising a first magnetic element and a second magnetic element arranged in mutual repulsion to each other to provide a contact-less bearing.

9. A pump according to claim 8, wherein said first and said second magnetic elements are mounted such that they are axially offset with respect to each other such that said magnetic bearing provides an axial pre-load to said shaft supported by said magnetic bearing.

10. A pump according to claim 8 or 9, wherein said magnetic bearing is mounted such that said axial displacement of said bearing mounting portion displaces said first magnetic element with respect to said second magnetic element, said second magnetic element being configured to support said rotatable shaft.

11. A pump according to any one of claims 6 to 10, wherein a further of said at least two bearings comprises a roller bearing (32).

12. A pump according to any one of claims 6 to 11, wherein said support element is configured such that an axial displacement of said rotor due to a rise in temperature during operation of said pump is at least partially offset by said axial displacement of said support element.

13. A pump according to any one of claims 8 to 12, wherein said pump comprises a vacuum pump, in some embodiments a turbomolecular pump.

14. A pump according to any one of claims 6 to 13, wherein said support element is attached to said stator.

15. A pump according to any one of claims 6 to 14, wherein said support element comprises a support element according to claim 5, said pump further comprising:
control circuitry (40) configured to control said heater to heat said distortable portion during operation of said pump.

## Patentansprüche

1. Stützelement (50) zur Anbringung eines Lagers (34), das zum Stützen einer drehbaren Welle (20) ausgebildet ist;
wobei das Stützelement (50) einen verformbaren Abschnitt (56) und einen Lageranbringungsabschnitt (52) aufweist, wobei der verformbare Abschnitt (56) mit dem Lageranbringungsabschnitt (52) verbunden ist und aus einer Mehrzahl von Materialien gebildet ist, wobei jedes der Mehrzahl von Materialien einen unterschiedlichen Wärmeausdehnungskoeffizienten aufweist, so dass eine Temperaturänderung des verformbaren Abschnitts bewirkt, dass sich der verformbare Abschnitt aufgrund der unterschiedlichen Ausdehnung der Mehrzahl von Materialien verformt;
wobei das Stützelement so ausgebildet ist, dass eine Verformung des verformbaren Abschnitts den Lageranbringungsabschnitt (50) in einer axialen Richtung relativ zu einer Achse der drehbaren Welle (20), für deren Lagerung das Lager ausgebildet ist, verschiebt, wobei ein Betrag der axialen Verschiebung von der Temperaturänderung abhängt.

2. Stützelement nach Anspruch 1, wobei das Stützelement Folgendes aufweist:
eine äußere Nabe (54) zur Anbringung an einem Gehäuse und eine innere Nabe (52), wobei die innere Nabe den Lageranbringungsabschnitt aufweist und die innere und die äußere Nabe durch den verformbaren Abschnitt (56) miteinander verbunden sind.

3. Stützelement nach Anspruch 2, wobei die äußere Nabe (54) mit der inneren Nabe (52) durch eine Mehrzahl von Armen (56) verbunden ist, wobei zumindest ein Teil der Mehrzahl von Armen den verformbaren Abschnitt aufweisen.

4. Stützelement nach Anspruch 3, wobei der verformbare Abschnitt eine Mehrzahl von Bimetallstreifen aufweist, wobei zumindest ein Teil der Mehrzahl von Armen einen der Mehrzahl von Bimetallstreifen aufweisen, wobei die Bimetallstreifen so ausgebildet sind, dass sie sich als Reaktion auf die Temperaturänderung biegen.

5. Stützelement nach einem der vorhergehenden Ansprüche, wobei das Stützelement eine Heizeinrichtung (57) aufweist, die in thermischer Verbindung mit dem verformbaren Abschnitt angebracht ist.

6. Pumpe (10), die Folgendes aufweist:
einen Rotor (20) und einen Stator (25);
wobei der Rotor (20) eine Welle aufweist, die drehbar in dem Stator angebracht ist, wobei die Welle von mindestens zwei Lagern (32, 34) gestützt ist, wobei eines der Lager (34) an einem Lageranbringungsabschnitt (52) eines Stützelements gemäß einem der vorhergehenden Ansprüche angebracht ist.

7. Pumpe nach Anspruch 6, wobei das eine der Lager, das an dem Lageranbringungsabschnitt des Stützelements angebracht ist, ein Magnetlager (34) aufweist.

8. Pumpe nach Anspruch 7, wobei das Magnetlager ein erstes magnetisches Element und ein zweites magnetisches Element aufweist, die in gegenseitiger Abstoßung zueinander angeordnet sind, um ein berührungsloses Lager zu schaffen.

9. Pumpe nach Anspruch 8, wobei das erste und das zweite magnetische Element so angebracht sind, dass sie axial zueinander versetzt sind, so dass das Magnetlager eine axiale Vorspannung auf die von dem Magnetlager getragene Welle ausübt.

10. Pumpe nach Anspruch 8 oder 9, wobei das Magnetlager so montiert ist, dass die axiale Verschiebung des Lageranbringungsabschnitts das erste magnetische Element in Bezug auf das zweite magnetische Element verschiebt, wobei das zweite magnetische Element zum Stützen der drehbaren Welle ausgebildet ist.

11. Pumpe nach einem der Ansprüche 6 bis 10, wobei ein weiteres der mindestens zwei Lager ein Wälzlager (32) aufweist.

12. Pumpe nach einem der Ansprüche 6 bis 11, wobei das Stützelement so gestaltet ist, dass eine axiale Verschiebung des Rotors aufgrund eines Temperaturanstiegs während des Betriebs der Pumpe zumindest teilweise durch die axiale Verschiebung des Stützelements ausgeglichen wird.

13. Pumpe nach einem der Ansprüche 8 bis 12, wobei die Pumpe eine Vakuumpumpe, in einigen Ausführungsformen eine Turbomolekularpumpe, aufweist.

14. Pumpe nach einem der Ansprüche 6 bis 13, wobei das Stützelement an dem Stator befestigt ist.

15. Pumpe nach einem der Ansprüche 6 bis 14, wobei das Stützelement ein Stützelement nach Anspruch 5 aufweist, wobei die Pumpe ferner Folgendes aufweist:
Steuerschaltkreise (40), die so ausgebildet sind, dass sie die Heizeinrichtung dazu steuern, den verformbaren Teil während des Betriebs der Pumpe zu erwärmen.

## Revendications

1. Élément de support (50) pour monter un palier (34) configuré pour supporter un arbre rotatif (20) ;
ledit élément de support (50) comprenant une partie déformable (56) et une partie de montage de palier (52), ladite partie déformable (56) étant reliée à ladite partie de montage de palier (52) et étant constituée d'une pluralité de matériaux, chacun de ladite pluralité de matériaux ayant un coefficient de dilatation thermique différent de telle sorte qu'un changement de température de ladite partie déformable amène ladite partie déformable à se déformer en raison d'une dilatation différentielle de ladite pluralité de matériaux ;
ledit élément de support étant configuré de telle sorte qu'une déformation de ladite partie déformable déplace ladite partie de montage de palier (50) dans une direction axiale relativement à un axe dudit arbre rotatif (20) que ledit palier est configuré pour supporter, une quantité de déplacement axial dépendant dudit changement de température.

2. Élément de support selon la revendication 1, ledit élément de support comprenant : un moyeu extérieur (54) pour un montage sur un boîtier, et un moyeu intérieur (52), ledit moyeu intérieur comprenant ladite partie de montage de palier, lesdits moyeux intérieur et extérieur étant reliés ensemble par ladite partie déformable (56).

3. Élément de support selon la revendication 2, ledit moyeu extérieur (54) étant relié audit moyeu intérieur (52) par une pluralité de bras (56), au moins certains de ladite pluralité de bras comprenant ladite partie déformable.

4. Élément de support selon la revendication 3, dans lequel ladite partie déformable comprend une pluralité de bilames au moins certains de ladite pluralité de bras comprenant un de ladite pluralité de bilames, lesdits bilames étant configurés pour se courber en réponse audit changement de température.

5. Élément de support selon une quelconque revendication précédente, ledit élément de support comprenant un dispositif de chauffage (57) monté en communication thermique avec ladite partie déformable.

6. Pompe (10) comprenant :
un rotor (20) et un stator (25) ;
ledit rotor (20) comprenant un arbre monté de manière rotative dans ledit stator, ledit arbre étant supporté par au moins deux paliers (32, 34), un desdits paliers (34) étant monté sur une partie de montage de palier (52) d'un élément de support selon une quelconque revendication précédente.

7. Pompe selon la revendication 6, dans laquelle ledit un desdits paliers montés sur ladite partie de montage de palier dudit élément de support comprend un palier magnétique (34).

8. Pompe selon la revendication 7, ledit palier magnétique comprenant un premier élément magnétique et un deuxième élément magnétique agencés en répulsion mutuelle l'un vis-à-vis de l'autre pour fournir un palier sans contact.

9. Pompe selon la revendication 8, dans laquelle lesdits premier et deuxième éléments magnétiques sont montés de telle sorte qu'ils soient décalés axialement l'un par rapport à l'autre de telle sorte que ledit palier magnétique fournisse une précharge axiale audit arbre supporté par ledit palier magnétique.

10. Pompe selon la revendication 8 ou 9, dans laquelle ledit palier magnétique est monté de telle sorte que ledit déplacement axial de ladite partie de montage de palier déplace ledit premier élément magnétique par rapport audit deuxième élément magnétique, ledit deuxième élément magnétique étant configuré pour supporter ledit arbre rotatif.

11. Pompe selon l'une quelconque des revendications 6 à 10, dans laquelle un autre desdits au moins deux paliers comprend un palier à rouleaux (32).

12. Pompe selon l'une quelconque des revendications 6 à 11, dans laquelle ledit élément de support est configuré de telle sorte qu'un déplacement axial dudit rotor en raison d'une augmentation de température durant le fonctionnement de ladite pompe soit au moins partiellement décalé par ledit déplacement axial dudit élément de support.

13. Pompe selon l'une quelconque des revendications 8 à 12, dans laquelle ladite pompe comprend une pompe à vide, dans certains modes de réalisation une pompe turbomoléculaire.

14. Pompe selon l'une quelconque des revendications 6 à 13, dans laquelle ledit élément de support est fixé audit stator.

15. Pompe selon l'une quelconque des revendications 6 à 14, dans laquelle ledit élément de support comprend un élément de support selon la revendication 5, ladite pompe comprenant en outre :
un ensemble de circuits de commande (40) configuré pour commander ledit dispositif de chauffage pour chauffer ladite partie déformable durant le fonctionnement de ladite pompe.
